**Europäisches Patentamt**

**European Patent Office**

**Office européen des brevets**

(19)

(11)  **EP 1 145 039 B1**

(12)  **EUROPÄISCHE PATENTSCHRIFT**

(45) Veröffentlichungstag und Bekanntmachung des
Hinweises auf die Patenterteilung:
**12.02.2003   Patentblatt 2003/07**

(21) Anmeldenummer: **99966891.6**

(22) Anmeldetag: **22.12.1999**

(51) Int Cl.[7]: **G01S 13/90**

(86) Internationale Anmeldenummer:
**PCT/DE99/04066**

(87) Internationale Veröffentlichungsnummer:
**WO 00/043808 (27.07.2000 Gazette 2000/30)**

(54) **VERFAHREN ZUR INTERFEROMETRISCHEN RADARMESSUNG**

METHOD FOR INTERFEROMETRICAL RADAR MEASUREMENT

PROCEDE DE MESURE RADAR INTERFEROMETRIQUE

(84) Benannte Vertragsstaaten:
**DE ES FR GB IT NL SE**

(30) Priorität: **21.01.1999   DE 19902007**

(43) Veröffentlichungstag der Anmeldung:
**17.10.2001   Patentblatt 2001/42**

(73) Patentinhaber: **Astrium GmbH**
**85521 Ottobrunn (DE)**

(72) Erfinder:
• **WOLFRAMM, Aribert, P.**
**D-86899 Landsberg (DE)**
• **KLAUSING, Helmut**
**D-82234 Wessling-Hochstadt (DE)**

(74) Vertreter: **Ulrich, Thomas**
**EADS Deutschland GmbH,**
**LG-PM - Patente**
**81663 München (DE)**

(56) Entgegenhaltungen:
EP-A- 0 634 668          EP-A- 0 757 259
DE-A- 4 306 920          DE-A- 4 328 573
DE-C- 3 922 086

• GRIFFITHS H: "INTERFEROMETRIC SYNTHETIC
APERTURE RADAR" ELECTRONICS AND
COMMUNICATION ENGINEERING
JOURNAL,GB,INSTITUTION OF ELECTRICAL
ENGINEERS, LONDON, Bd. 7, Nr. 6, 1. Dezember
1995 (1995-12-01), Seiten 247-256, XP000545120
ISSN: 0954-0695

**Beschreibung**

Die Erfindung bezieht sich auf ein Verfahren zur interferometrischen Radarmessung gemäß dem Gattungsbegriff des Anspruchs 1,

Konstruktionsbedingt sind Radargeräte präzise Entfernungsmeßgeräte, was besagt, daß ein Radargerät ohne besondere Vorkehrungen lediglich den Abstand eines Ziels von der Antenne nicht jedoch dessen Richtung bestimmen kann. Man kann nur feststellen, ob sich ein Ziel innerhalb der Antennenkeule befindet oder nicht.

Dieses Problem wird beim bisher bekannten ROSAR- beziehungsweise Heli-Radar weitgehend behoben, indem z.B. 16 in der Höhe gestaffelte Antennnen mit einem Antennenöffnungswinkel von beispielsweise 2,5° verwendet werden. Hiermit kann man den Ort eines erhöhten Hindernisses etc. innerhalb einer Genauigkeit von ca. 2,5° in der Elevation bestimmen. Allerdings werden auch hier gleichweit entfernte Ziele in der gleichen Antenne im gleichen Bildpunkt dargestellt.

Die azimutale Auflösung des bekannten Heli-Radars beträgt aufgrund einer besonderen Signalverarbeitung ca. 0,2°. Hierzu wird auf die Offenbarung in DE 39 22 086 C1 verwiesen. Die Richtung eines Hindernisses und damit den Ort im Raum, an dem dieses sich befindet, kann man jedoch erst mit Hilfe einer Triangulation bestimmen, wobei im einfachsten Fall hierzu zwei örtlich getrennte Radargeräte eingesetzt sein können.

Man kann sich jedoch auch die Eigenschaften eines kohärenten Radargerätes zu Nutze machen und mit Hilfe der Phase des Sendesignals eine Art Triangulation vornehmen. Zu diesem Zweck benutzt man ein kohärentes Radargerät, welches ein Signal über eine Sendeantenne kohärent abstrahlt und die zurückgestreuten Echos über zwei örtlich getrennte Empfangsantennen wieder kohärent empfängt. Eine kohärente Auswertung erlaubt die Berechnung der Phasendifferenz zwischen beiden Empfangssignalen. Aus der Phasendifferenz wird die Richtung bestimmt aus der die gestreuten Echos empfangen worden sind. Hat man nun Entfernung und Richtung eines "Hindernisses" berechnet, so läßt sich auch dessen Ort im Raum bestimmen. Diese Art der dreidimensionalen Ortsbestimmung mit Hilfe eines kohärenten Radargerätes mit einer Sende- und zwei Empfangsantennen wird allgemein "Radarinterferometrie" genannt und ist seit langem bekannt. Sie wird bereits für die Erstellung topographischer Karten mit Hilfe von SAR-Systemen auf Flugzeugen verwendet, beispielsweise durch das DOSAR der Fa. Dornier GmbH.

Zum weiteren Stand der Technik hierzu sei auf folgende Druckschriften verwiesen:

a) C.T. Allan, Review Article, Interferometric Synthetic Apertur Radar, in IEEE Geoscience and Remote Sensing Society Newes Letter, Sept. 1995, p. 6 ff.

b) S. Buckreuß, J. Moreira, H. Rinkel and G. Waller, - Advanced SAR Interferometry Study, DLR Mitteilung 94 - 10, Juni 1994, DLR, Institut für Hochfrequenztechnik, Oberpfaffenhofen,

Der gesamte bisherige und vorstehend aufgeführte Stand der Technik einschließlich des hier zugrundeliegenden ROSAR -Prinzips projeziert Geländeerhöhungen oder sonstige erhöhten Hindernisse in einer Ebene, so daß bei Unkenntnis der vorliegenden abgebildeten Topographie des Geländes die Höhe des jeweiligen Hindernisses nicht zu erkennen ist. Zur Flugführung aber ist ein dreidimensionales Bild erforderlich.

Der vorliegenden Erfindung liegt die Aufgabe zugrunde, auf der Basis des ROSAR-Prinzips Maßnahmen aufzuzeigen, die eine quasi-dreidimensionale Radar-Bilddarstellung von Gelände- und sonstigen Hindernissen ermöglichen.

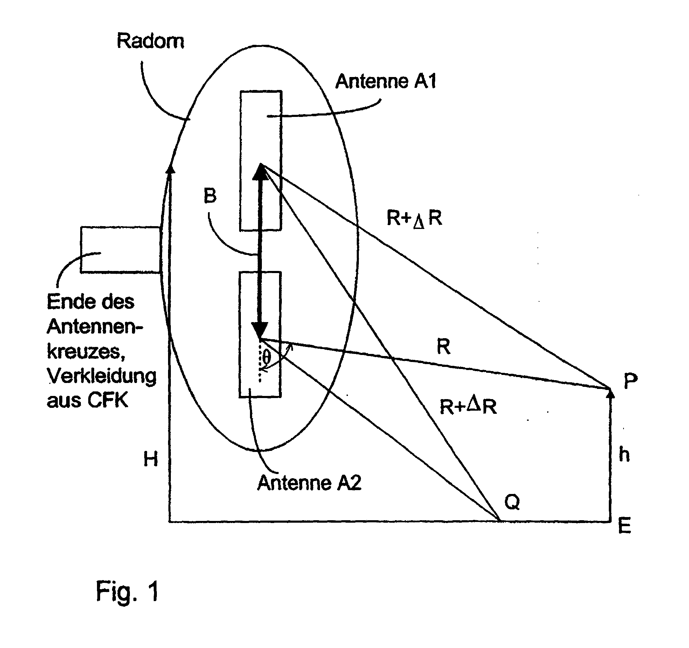

Diese Aufgabe wird durch die im Anspruch 1 vorgeschlagenen Maßnahmen in überraschend einfacher Weise gelöst In den Unteransprüchen sind Ausgestaltungen und Weiterbildungen angegeben und in der Beschreibung ist ein Ausführungsbeispiel erläutert, das in der Figur 1 skizziert ist. Es zeigen:

Fig. 1    ein Ausführungsbeispiel bezüglich der typischen Geometrie für ein interferometrisches ROSAR in schematischer Darstellung,

Fig. 2    ein Blockschaltbild des Ausführungsbeispiels gemäß Fig. 1,

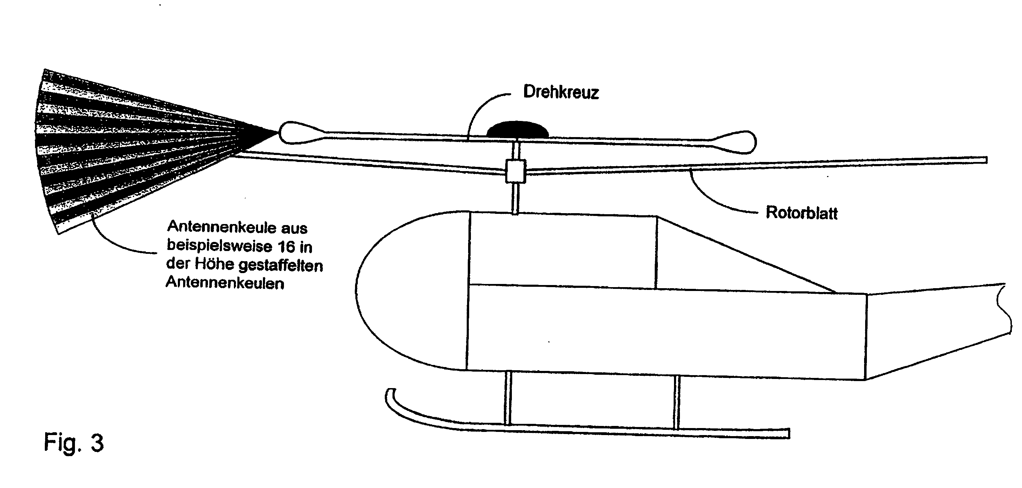

Fig. 3    ein Schaubild des Standes der Technik bezüglich des ROSAR-Prinzips.

Der allgemeine Erfindungsgedanke sieht vor, bei einem nach dem ROSAR-System arbeitenden Hubschrauber eine quasi-dreidimensionale Radarbilddarstellung zur Flugführung dadurch zu erhalten, daß einem auf dem rotierenden Drehkreuz angeordneten Sender zwei kohärente Empfangsantennen mit Empfangskanälen zugeordnet werden.

Das bisherige ROSAR-System weist zum Erhalt eines dreidimensionalen Bild beispielsweise 16 Sender und Empfänger mit ihren Kanälen auf. Diese weisen jedoch eine Richtungsungenauigkeit von ca. 2,5° auf. Wird nun dieses ROSAR-System - wie vorstehend erwähnt - um einen hochgenauen kohärenten Empfangskanal erweitert, so sind für den Erhalt des hochgenauen dreidimensionalen Radarbildes nur mehr ein Sender und zwei kohärente Empfänger statt der bisher beispielsweise sechzehn Sender und Empfänger erforderlich. Durch das interferometrische Prinzip wird die bisherige Richtungsungenauigkeit um den Faktor ca. 100 verbessert.

Nachstehende Beschreibung eines Ausführungsbeispiels - in Fig. 1 skizziert - soll dies näher erläutern:

Ein nach dem ROSAR-Prinzip funktionierender Hubschrauber fliegt in einer Höhe H über der Erdoberfläche. Am Ende des rotierenden Antennenkreuzes sind eine Sende- und zwei Empfangsantennen mit zugehöriger kohärenter Sende-und Empfangselektronik angebracht. Die empfangenen Echos werden verstärkt, digitalisiert und weiterverarbeitet.

Die Distanz zwischen dieser vorstehend beschriebenen Anordnung, die nachfolgend INROSAR- System genannt wird, und dem Aufpunkt P, der sich in einer relativen Höhe h befindet, wird R genannt. Der Abstand zwischen der Antenne A1 des INROSAR's zum Aufpunkt P beträgt R + ΔR und ist somit um einen geringen Betrag ΔR größer als der Abstand R zur Antenne A2. Der Wegunterschied ΔR der beiden Abstände kann aus der bekannten Wellenlänge λ des gesendeten Radarsignals und des gemessenen Phasenunterschiedes Δφ des Empfangsechos der beiden kohärenten Empfangskanäle berechnet werden.

Dieser Phasenunterschied Δφ der Empfangsechos wiederum wird aus den Bildern berechnet, die durch Prozessierung der Empfangsechos entstanden sind. Jedes der beiden Bilder liegt in komplexer, digitaler Form vor, d.h. es besitzt Real- und Imaginärteil - oder äquivalent: Amplitude und Phase.

Der Phasenunterschied Δφ ergibt sich nun bis auf ein Vielfaches von π (modulo π) durch komplexe Multiplikation der Bildpunkte des einen Bildes mit den konjugiert komplexen Bildpunkten des anderen Bildes und anschließender Bildung des arctan des jeweiligen Real- und Imaginärteils. Damit erhält man den Phasenunterschied Δφ und durch Einsetzen von Δφ in (G1. 1) dann ΔR.

$$\Delta R = \frac{\lambda}{4\pi}\, \Delta\phi. \tag{1}$$

Die Phasenzentren der beiden Empfangsantennen A1 und A2 sind um die Länge B, der sogenannten Basislinie, entfernt. Aus dem Cosinussatz und einigen einfachen Winkelbeziehungen ergibt sich :

$$\cos(\theta) = \frac{(R + \Delta R)^2 - R^2 - B^2}{2 \cdot R \cdot B} \tag{2}$$

Nachdem in Gleichung (2) der Sichtwinkel θ berechnet worden ist, kann jetzt die relative Höhe h bestimmt werden:

$$h = H - R \cdot \cos(\theta) \tag{3}$$

Zur Darstellung der Bildpunkte auf dem Graphik-Bildschirm wird bei dem INROSAR die Höhe h eigentlich nicht benötigt, sondern es wird lediglich der Sichtwinkel θ für die Berechnung der Koordinaten eines Aufpunktes P auf dem Graphik-Bildschirm verwendet. Unerheblich ist auch die Kenntnis des Neigungswinkels der Antenne, da die Darstellung auf dem Bildschirm lediglich eine relative Darstellung der Bildpunkte in Bezug auf die Senkechte zur Basislinie B der beiden Antennen A1 und A2 ist. Zwar ist die Bilddarstellung abhängig von der Lage des Hubschraubers - beispielsweise durch das Nicken - jedoch stehen die Antennen des INROSAR-Sytems und die Bildmitte immer in einer festen Beziehung zueinander. Die Höhe h und der Neigungswinkel α der Antennen werden nur benötigt, wenn mit Hilfe dieses INROSAR's eine topographische Karte mit einer absoluten Höhe H der überflogenen Gegend erstellt werden soll. Diese vorstehenden Formeln sind auch für eine Fehlerbetrachtung nützlich, wie nachstehend erläutert wird.

Die für INROSAR relevanten Fehler sind das Phasenrauschen δφ und die Veränderung der Basislinie B zwischen den Phasenzentren der Antennen A1 und A2. Das Phasenrauschen setzt sich aus einer Summe von Anteilen verschiedener Komponenten zusammen. Die größten Beiträge liefern der Sender, die Empfänger, der Systemtaktgeber und das A/D-Wandlerrauschen. Eine typische Größenordnung für das gesamte Phasenrauschen δφ eines INROSAR-Systems beträgt ca. 5°. Die Veränderung der Basislinie zwischen den Phasenzentren der Antennen A1 und A2 kann z. B. durch Erwärmung durch Sonneneinstrahlung entstehen. Als typischer Wert wird 0,001m angenommen. Die verschiedenen Einflüsse ergeben eine Streuung δh der Höhe des Aufpunktes P und damit eine Streuung des Blickwinkels δθ.

$$\delta h = \frac{\lambda \cdot R}{4\pi \cdot B} \, \delta\phi \qquad\qquad (4)$$

$$\delta h = -R \cdot \tan(\theta) \, \frac{\delta B}{B} \qquad\qquad (5)$$

Damit ergibt sich eine Streuung des Blickwinkels $\delta\theta$ wie folgt:

$$\delta\theta = \arcsin\left(\frac{\delta h}{R}\right) \qquad\qquad (6)$$

In einem Ausführungsbeispiel gemäß Fig. 1 fliegt der Hubschrauber in der Normallage. Dies bedeutet, daß die Antennen A1 und A2 senkrecht übereinander positioniert sind. Aus der Gleichung (1) wird $\Delta R$ bestimmt. Der Wert der gemessenen Phasendifferenz $\Delta\phi$ der Echos aus den Antennen A1, A2 ist mehrdeutig und kann nur bis auf einen Wert zwischen 0 und $2\pi$ bestimmt werden. Diese Mehrdeutigkeit von $2\pi$ muß durch Zusatzmessungen bestimmt werden. Hierzu eignet sich ein zur INROSAR-Konzeption zusätzlicher Sender/Empfänger mit in Elevation scharfbündelnder Sende/Empfangsantenne, die den untersten Blickwinkelbereich abdecken. Aufgrund ihrer scharfen Bündelung in Elevation kann aus den Empfangsechos die Entfernung zum Aufpunkt am Boden eindeutig bestimmt werden. Das INROSAR-System nimmt diese Entfernung als Grundwert und berechnet die weiteren Mehrdeutigkeiten aufgrund der steigenden Entfernung aus den stetigen Phasenübergängen. Ein Berechnungsbeispiel gibt die näheren Erläuterungen :

Ausgegangen wird von der Gegebenheit, daß der Hubschrauber in der Normallage fliegt. Dies bedeutet, daß die Antennen A1 und A2 senkrecht übereinander angeordnet sind:

Als Parameter gelten:

| Parameter | Bedeutung | Wert1/Wert2 |
|---|---|---|
| H | Flughöhe des INROSAR | 100 m |
| R + $\Delta$R | Entfernung zwischen Aufpunkt P und Antenne A1 | Beisp. 1: 500,009 m<br>Beisp. 2: 500,09 m |
| R | Entfernung zwischen Aufpunkt P und Antenne A2 | 500,00 m |
| B | Basislinie zwischen den Phasenzentren der Antennen | 0,15 m |
| $\delta$B | Fehler der Länge der Basislinie B | 0,001 m |
| $\delta\phi$ | Phasenrauschen des INROSAR | 5° |
| $\alpha$ | Neigungswinkel der Antennen A1 und A2 | 90° (senkrecht) |
| $\lambda$ | Radarwellenlänge | 0,0090909 |

Aus der Gleichung (2) folgt:

$$\theta = \arccos\left(\frac{(R + \Delta r)^2 - R^2 - B^2}{2 \cdot R \cdot B}\right) \qquad\qquad (7)$$

Beispiel 1:

$$\theta1 = \arccos\left(\frac{\left(500{,}009^2 - 500{,}000^2 - 0{,}15^2\right)}{2 \cdot 500{,}000 \cdot 0{,}15}\right)$$

$$= \arccos(0{,}05985)$$

$$= 86{,}57°$$

$$h1 = 300 - 500{,}00 \cdot \cos(86{,}57°)$$

$$= 70{,}09 \text{ m}$$

Beispiel 2:

$$\theta1 = \arccos\left(\frac{\left(500{,}09^2 - 500{,}00^2 - 0{,}15^2\right)}{2 \cdot 500{,}000 \cdot 0{,}15}\right)$$

$$= \arccos(0{,}0599904)$$

$$= 53{,}14°$$

$$h1 = 300 - 500{,}00 \cdot \cos(53{,}14°)$$

$$= 0{,}048\text{m}$$

Aus den Gleichungen (4) und (5) folgt für die Streuung δh der Höhe h des Aufpunktes P:

$$\delta h_{\delta\phi} = \frac{0{,}00909 \cdot 500{,}00}{4 \cdot \pi \cdot 0{,}15}(5°/57{,}3°)$$

$$= 0{,}21\text{m} \qquad \text{genau:}0{,}210401168\text{m}$$

$$\delta h_{\delta B} = -500{,}00 \cdot \tan(53{,}14°) \cdot \frac{0{,}001}{0{,}15}$$

$$= 4{,}45\text{m} \qquad \text{aus(2): } 2{,}035 - 0{,}048\text{m}$$

Damit ergibt sich eine Streuung des Blickwinkels δθ wie folgt:

Wegen Phasenrauschen δϕ = 5°:

$$\delta\theta = \arcsin\left(\frac{0{,}21}{500{,}00}\right)$$

$$= 0{,}02°$$

und wegen Fehler der Länge der Basislinie B um $\delta B = 0{,}001m$

$$\delta\phi = \arcsin\frac{4{,}45}{500{,}00}$$

$$= 0{,}5°$$

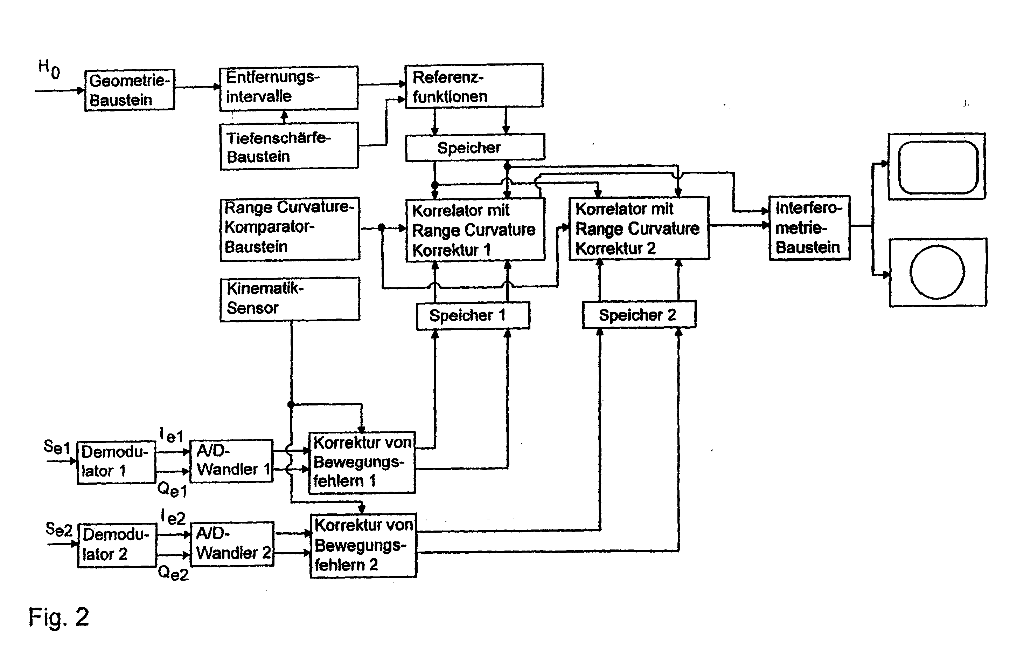

In Fig. 2 ist ein Blockschaltbild des in Fig. 1 veranschaulichten Ausführungsbeispiels gebracht, das mit den für das vorgeschlagene Interferometrische Radarverfahren erforderlichen Bausteinen ausgerüstet ist und für den Fachmann keiner weiteren Erläuterungen mehr bedarf.

**Patentansprüche**

1. Verfahren zur interferometrischen Radarmessung bei einem nach dem ROSAR-Prinzip arbeitenden Hubschrauber (Heli-Radar) **dadurch gekennzeichnet, daß** zu einem der auf dem rotierenden Drehkreuz angeordneten Sender des ROSAR-Systems zwei kohärente Empfangsantennen mit Empfangskanälen zugeordnet werden und der Wegunterschied ($\Delta R$) der beiden Abstände (R+ $\Delta R$, R) zum gemessenen Aufpunkt P in an sich bekannter Weise aus der Wellenlänge $\lambda$ des gesendeten Radarsignals und des gemessenen Phasenunterschiedes des Empfangsechos der beiden kohärenten Empfangskanäle berechnet werden.

2. Verfahren nach Anspruch 1, **dadurch gekennzeichnet, daß** zur Darstellung der Bildpunkte auf dem im ROSAR-System integrierten Graphik-Bildschirm der Sichtwinkel ($\theta$) für die Berechnung der Koordinaten des jeweiligen Aufpunktes (P, Q) herangezogen wird.

3. Verfahren nach Anspruch 1 oder 2, **dadurch gekennzeichnet, daß** die Antennen (A1, A2) und die Bildmitte des Graphik-Bildschirmes zueinander in fester Beziehung stehen.

**Claims**

1. Method for interferometric radar measurement in a helicopter operating by the ROSAR principle (heli radar), **characterised in that** two coherent reception antennae with reception channels are assigned to one of the transmitters of the ROSAR system arranged on the rotating turnstile, and the path difference ($\Delta R$) between the two distances (R+ $\Delta R$, R) to the point under consideration P is calculated in a manner known *per se* from the wavelength $\lambda$ of the transmitted radar signal and of the measured phase difference of the received echo of the two coherent reception channels.

2. Method according to claim 1, **characterised in that,** for showing the image points on the graphics display unit integrated in the ROSAR system, the viewing angle ($\theta$) is used for calculating the coordinates of the point under consideration (P, Q).

3. Method according to either claim 1 or claim 2, **characterised in that** the antennae (A1, A2) and the image centre of the graphics display unit are in a fixed relationship with one another.

**Revendications**

1. Procédé de mesure radar interférométrique dans un hélicoptère (radar d'hélicoptère) fonctionnant selon le principe ROSAR,
   **caractérisé en ce qu'**
   à un émetteur du système ROSAR installé sur le croisillon rotatif on associe deux antennes de réception cohérentes avec des canaux de réception et on calcule la différence de parcours ($\Delta R$) des deux distances (R + $\Delta R$, R) entre le point d'impact P mesuré avec la longueur d'onde $\lambda$ connu en soi du signal radar émis et de la différence de phases mesurée de l'écho de réception dans les deux canaux de réception cohérents.

2. Procédé de mesure radar interférométrique dans un hélicoptère selon la revendication 1,
   **caractérisé en ce que**

pour représenter les points images sur l'écran image graphique intégré au système ROSAR on utilise l'angle de vision ($\theta$) pour le calcul des coordonnées du point d'impact respectif (P, Q).

3. Procédé de mesure radar interférométrique dans un hélicoptère selon la revendication 1 ou 2,
   **caractérisé en ce que**
   les antennes (A1, A2) et le milieu de l'image de l'écran image graphique sont liées par une relation fixe.

Fig. 1

Fig. 2

$H_0$ — Geometrie-Baustein → Entfernungs-intervalle → Referenz-funktionen

Tiefenschärfe-Baustein

Speicher

Range Curvature-Komparator-Baustein → Korrelator mit Range Curvature Korrektur 1 → Korrelator mit Range Curvature Korrektur 2 → Interfero-metrie-Baustein

Kinematik-Sensor

Speicher 1

Speicher 2

$S_{e1}$ → Demodulator 1 — $I_{e1}$, $Q_{e1}$ → A/D-Wandler 1 → Korrektur von Bewegungs-fehlern 1

$S_{e2}$ → Demodulator 2 — $I_{e2}$, $Q_{e2}$ → A/D-Wandler 2 → Korrektur von Bewegungs-fehlern 2

EP 1 145 039 B1

Rotorblatt

Drehkreuz

Antennenkeule aus beispielsweise 16 in der Höhe gestaffelten Antennenkeulen

Fig. 3